Europäisches Patentamt

European Patent Office

Office européen des brevets

(11) Veröffentlichungsnummer: **0 035 751**

**A1**

(12) # EUROPÄISCHE PATENTANMELDUNG

(21) Anmeldenummer: 81101573.4

(22) Anmeldetag: 05.03.81

(51) Int. Cl.³: **C 04 B 35/12**
**C 04 B 35/64**

(30) Priorität: 08.03.80 DE 3008951

(43) Veröffentlichungstag der Anmeldung:
16.09.81 Patentblatt 81/37

(84) Benannte Vertragsstaaten:
DE FR GB

(71) Anmelder: BAYER AG
Zentralbereich Patente, Marken und Lizenzen
D-5090 Leverkusen 1, Bayerwerk(DE)

(72) Erfinder: Wilhelm, Volker, Dr.
An der Ruthen 2
D-5000 Köln 80(DE)

(72) Erfinder: Weber, Horst, Dr.
Fontanestrasse 11
D-5090 Leverkusen 1(DE)

(72) Erfinder: Drave, Heinz, Dr.
Völklinger Strasse 21
D-5090 Leverkusen 1(DE)

(54) Chromoxid für die Feuerfestindustrie.

(57) Die Erfindung betrifft ein Verfahren zur Herstellung von grobkörnigem Chromoxid für die Feuerfestindustrie durch Suspendieren feinteiligen Chromoxids und/oder chromoxidhaltiger Verbindungen mit kohlenstoffreichen Materialien in Wasser, Trocknung in einem rotierenden Ofen, Sinterung des dabei entstehenden Granulates unter Lufteintritt und Brechen der Granulate auf Korngrößen unterhalb 5 mm.

EP 0 035 751 A1

BAYER AKTIENGESELLSCHAFT                5090 Leverkusen, Bayerwerk

Zentralbereich                          St/bc/c
Patente, Marken und Lizenzen


Chromoxid für die Feuerfestindustrie
_____


Die Erfindung betrifft ein Verfahren zur Herstellung von grobkörnigem Chromoxid für die Feuerfestindustrie durch Suspendieren feinteiligen Chromoxids und/oder chromoxidhaltiger Verbindungen mit kohlenstoffreichen Materialien in Wasser, Trocknung in einem rotierenden Ofen, Sinterung des dabei entstehenden Granulates unter Lufteintritt und Brechen der Granulate auf Korngrößen unterhalb 5 mm.

Chromoxid wird technisch aus höherwertigen Chromverbindungen, vorzugsweise Natriumdichromat, durch Reduktion mit Schwefel, Ammoniumchlorid, Ammoniumsulfat oder anderen Reduktionsmitteln bei Temperaturen von etwa 800 bis 1000°C hergestellt. Dabei fallen Produkte in Pigmentfeinheit an. Diese werden in Anstrichstoffen und Beschichtungen, als Rohstoff für die Chrommetallgewinnung oder für die Herstellung von Feuerfestmassen verwendet, wobei sich aber ihre Feinteiligkeit äußerst nachteilig auswirkt.

Zur Herstellung von Feuerfestmassen werden nämlich Chromoxide gewünscht, deren Teilchengrößen ein Korn-

Le A 20 188

spektrum von einigen μm bis zu mehreren mm aufweisen.
Diese können dann z.B. durch Stampfen oder isostatisches
Pressen zu Feuerfeststeinen verarbeitet werden, die
frei von Rissen sind und den hohen Ansprüchen der
Feuerfestindustrie an chemische Beständigkeit, Temperaturwechselbeständigkeit usw. genügen.

Die für die Feuerfestmassenherstellung benötigten Chromoxide bestehen zu etwa einem Drittel aus Teilchen, die
kleiner als 50μm sind. Dieser "Mehl" genannte Anteil
steht mit den eingangs beschriebenen handelsüblichen
Chromoxiden zur Verfügung. Jeweils etwa ein weiteres
Drittel des Chromoxides soll aber Teilchengrößen von
etwa 50μm bis 1 mm sowie 1 bis 5 mm aufweisen.
Es wird im folgenden "grobkörniges Chromoxid" genannt.

Grobkörniges Chromoxid kann z.B. durch mehrstündiges
Erhitzen von Chromoxid bei Temperaturen zwischen
1800 und 2000°C erhalten werden. Man könnte auch ein
geeignetes Material dadurch erhalten, daß man Chromoxid
bis zum Schmelzpunkt erhitzt (2000 bis 2400°C) und das
Produkt sich dann verfestigen läßt. Derartige Verfahren
fordern aber einen beträchtlichen Kostenaufwand.

Überraschenderweise wurde nun gefunden, daß man ein
für die Feuerfestindustrie interessantes großkörniges
Chromoxid erhält, wenn man feinteiliges Chromoxid
allein oder im Gemisch mit Chromoxid bildenden Ver-

Le A 20 188

bindungen zusammen mit kohlenstoffreichen Materialien und Wasser vermengt, dieses Gemenge in einem rotierenden Ofen trocknet und die entstandenen Granulate sintert.

Das Verfahren zur Herstellung von grobkörnigem Chromoxid für die Feuerfestindustrie ist daher dadurch gekennzeichnet, daß man feinteiliges Chromoxid und/oder chromoxidhaltige Verbindungen zusammen mit kohlenstoffreichen Materialien in Wasser anmengt, das Gemenge in einem rotierenden Ofen trocknet, das dabei entstehende Granulat unter Lufteintritt sintert und auf Korngrößen unterhalb 5 mm bricht. Als kohlenstoffreiche Materialien kommen Kohlen und/oder Kohlehydrate und/oder halogenfreie Kunststoffe in Frage.

Das Ausgangsgemenge bereitet man am besten in Form einer pumpfähigen Suspension. Man kann aber auch mit weniger Wasser ein knetbares Gemenge herstellen, das man gegebenenfalls auf einer üblichen Granuliereinrichtung in geeignete Granalien überführt. Die Menge an zugesetzten kohlenstoffreichen Materialien sollte 10 Gew.-%, bezogen auf die nach der Sinterung gebildete $Cr_2O_3$-Menge, nicht überschreiten. So wird die Verunreinigung des Endproduktes an Chromsuboxiden und/oder Chromcarbiden vermieden. Aus diesem Grund müssen die Granalien nach dem Trocknen im rotierenden Ofen auch unter Luftzutritt gesintert werden.

Die kohlenstoffreichen Verbindungen werden deshalb in Mengen von 0,1 bis 10 Gew.-%, vorzugsweise 1 bis 5 Gew.-%, bezogen auf die nach der Glühung gebildete

Le A 20 188

- 4 -

$Cr_2O_3$-Menge dem wäßrigen Ausgangsgemenge zugesetzt.

Geht man von einem Gemenge aus, das neben feinteiligem Chromoxid auch chromoxidbildende Substanzen enthält, so kommen als chromoxidbildende Substanzen alle bekannten Chromsalze, wie z.B. $(NH_4)_2Cr_2O_7$, Chromsulfate, Nitrate, Chromsäure usw. in Frage.

Vorteilhaft für die spätere Anwendung ist der Einsatz alkalifreier Verbindungen. Dadurch ist ein Waschen der nach der Glühung entstehenden Granalien nicht notwendig. Zum Trocknen des Gemenges und Glühen der getrockneten Granalien verwendet man am besten durch Erdgas direkt beheizte Trommel- oder Drehöfen. Es können jedoch auch indirekt beheizte Öfen eingesetzt werden, deren Handhabung aber aufwendiger ist.

Besonders vorteilhaft ist es dabei, die Suspension der Ausgangssubstanzen bei Temperaturen zwischen 100 und 350°C zu trocknen, das getrocknete Granulat bei Temperaturen zwischen 800 und 1500°C, besonders bevorzugt 1100 und 1300°C, eine bis 5 Stunden, besonders bevorzugt eine bis 3 Stunden, zu sintern.

Es ist zweckmäßig, die nach der Sinterung gebildeten Granalien bei der Entleerung aus dem heißen Ofen abzuschrecken. Dazu verwendet man am besten eine unter dem Ofen installierte wassergekühlte Austragsschnecke, die gleichzeitig als Förder- und Dosierorgan dem nachgeschalteten Brecher dient.

Mit dem Brecher werden Granulate, die größer als 5 mm Teilchengröße aufweisen, auf die gewünschte Feinheit heruntergebrochen. Das so erhaltene Produkt liegt in einem Teilchengrößenbereich von 50 bis 5000 µm. Gegebenenfalls kann man das Kornspektrum durch Brechen und nachgeschaltetes Sieben in dem angegebenen Bereich beliebig verändern.

Der besondere Vorteil des erfindungsgemäßen Verfahrens liegt darin, daß es Produkte liefert, aus denen man sehr dichte isostatisch gepreßte oder gegossene Steine herstellen kann, die weder beim Trocknen noch beim anschließenden Glühen Risse bekommen oder Schwund erleiden. Gegenüber den bisher üblichen Verfahren zur Herstellung solcher Steine aus feinteiligem Chromoxid ist der Ausschuß deshalb äußerst gering. Die mit grobteiligem $Cr_2O_3$ hergestellten Steine weisen eine sehr hohe Beständigkeit gegen chemische Angriffe, insbesondere gegen Schlacken und Gasflüsse, auf. Ebenfalls ist die Temperaturwechselbeständigkeit dieser $Cr_2O_3$-Steine ausgezeichnet. Die aus dem neuen, grobkörnigen Chromoxid hergestellten Steine sind daher besonders gut geeignet für die Herstellung von Wannen in der Glasindustrie oder zur Ausmauerung von Hochöfen, Müllverbrennungsanlagen und Kohlevergasungsanlagen.

Außer zu isostatisch gepreßten oder gegossenen Steinen kann man das erfindungsgemäße grobkörnige Chromoxid auch zur Herstellung von Stampfmassen zur Auskleidung von Hochöfen verwenden. Die oben geschilderten Vorteile gelten auch für diese Verwendung.

Le A 20 188

Nachfolgend wird das erfindungsgemäße Verfahren beispielhaft erläutert.

<u>Beispiel 1</u>

In einem handelsüblichen Mischer werden 1000 kg feinteiliges Chromoxid, 20 kg fein gemahlener Torfkoks
und 1200 l Wasser zu einer homogenen Suspension vermischt. Das Gemenge wird in einem mit Erdgas/Luft
unter oxidierenden Bedingungen direkt beheizten Trommelofen gepumpt. Darin wird die Suspension unter Drehen
auf 300°C aufgeheizt. Bei dieser drehenden Trocknung
entstehen Grenalien in einer Größe bis zu 10 cm Durchmesser. Diese werden im Drehen auf 1200°C aufgeheizt
und bei dieser Temperatur 3 Stunden lang gesintert.
Nach der Sinterung werden die Grenalien mit einer
wassergekühlten Schnecke aus dem heißen Ofen in einen
handelsüblichen Backenbrecher übertragen. Das Produkt
wird im Teilchengrößenbereich von 50µm bis 5 mm erhalten. Es ist so hart, daß es zur Herstellung von Feuerfestmassen für rißfreie Auskleidung oder rißfreie
Feuerfeststeine geeignet ist.

<u>Vergleichsbeispiel</u>

Verfährt man gemäß Beispiel 1 ohne Zugabe von Torfkoks
oder Kohlenstoffverbindungen, sind nach der Sinterung die Granalien so weich, daß sie beim Brechen
und später beim isostatischen Verpressen zu Chromoxidsteinen wieder zerfallen.

<u>Beispiel 2</u>

Es wird gemäß Beispiel 1 verfahren. Anstelle von Torfkoks werden 40 kg Holzmehl der Ausgangsmischung zuge-

<u>Le A 20 188</u>

setzt. Die Verarbeitung erfolgt wie unter 1 beschrieben. Die Ergebnisse sind die gleichen wie bei 1.

Beispiel 3

Wie Beispiel 1, nur anstelle von Torfkoks werden 60 kg
zerkleinerte halogenfreie Kunststoffabfälle zugesetzt.
Verarbeitung und Ergebnisse wie unter 1.

Beispiel 4

Wie Beispiel 1, nur anstelle von Torfkoks werden 20 kg
Aktivkohle zugesetzt. Verarbeitung und Ergebnisse wie
unter 1.

Beispiel 5

Wie Beispiel 1, nur anstelle von Torfkoks werden 70 kg
Zucker zugesetzt. Verarbeitung und Ergebnis wie unter 1.

Beispiel 6

1050 kg feinteiliges Chromoxid, 210 kg $CrO_3$ und 21 kg
Torfkoks werden in einem handelsüblichen Mischer mit
1200 l Wasser zu einer homogenen Suspension vermischt.
Verarbeitung und Ergebnis wie unter 1.

Beispiel 7

In einem handelsüblichen Kneter werden 1000 kg feinteiliges Chromoxid, 20 kg Torfkoks und 400 l Wasser
zu einer Paste verknetet. Diese Paste wird auf einer

Le A 20 188

handelsüblichen Granuliermaschine zu Granalien verarbeitet. Dabei sollte die Granaliengröße 5 cm nicht überschreiten. Diese Granalien werden in einem Trommelofen, wie unter 1 beschrieben, überführt. Der Trommelofen wird ebenfalls mit Erdgas/Luft unter oxidierenden Bedingungen direkt beheizt. Die Granalien werden im Drehen auf 200°C zum Trocknen aufgeheizt. Anschließend wird im Drehen auf 1200°C erhitzt und bei dieser Temperatur 3 Stunden lang gesintert.

Die weitere Verarbeitung (Aufarbeitung und Ergebnisse) entspricht der im Beispiel 1.

Patentansprüche

1) Verfahren zur Herstellung von grobkörnigem Chromoxid für die Feuerfestindustrie, dadurch gekennzeichnet, daß man feinteiliges Chromoxid und/oder chromoxidhaltige Verbindungen zusammen mit kohlenstoffreichen Materialien in Wasser anmengt, das Gemenge in einem rotierenden Ofen trocknet, das dabei entstehende Granulat unter Lufteintritt sintert und auf Korngrößen unterhalb 5 mm bricht.

2) Verfahren gemäß Anspruch 1, dadurch gekennzeichnet, daß die kohlenstoffreichen Materialien Kohle und/oder Kohlehydrate und/oder halogenfreie Kunststoffe sind.

3) Verfahren gemäß einem der Ansprüche 1 und 2, dadurch gekennzeichnet, daß die kohlenstoffreichen Materialien in Mengen von 0,1 bis 10 Gew.-%, vorzugsweise 1 bis 5 Gew.-%, bezogen auf die nach der Glühung gebildete $Cr_2O_3$-Menge, dem wäßrigen Ausgangsgemenge zugesetzt werden.

4) Verfahren gemäß einem der Ansprüche 1 bis 3, dadurch gekennzeichnet, daß die Suspension der Ausgangssubstanzen bei Temperaturen von 100 bis 350°C getrocknet wird.

5) Verfahren gemäß einem der Ansprüche 1 bis 4, dadurch gekennzeichnet, daß das getrocknete Granulat bei Temperaturen zwischen 800 und 1500°C, be-

Le A 20 188

sonders bevorzugt 1100 und 1300°C, eine bis 5 Stunden, besonders bevorzugt eine bis 3 Stunden, gesintert wird.

Le A 20 188

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 044 885 (ÖSTERREICHISCH-AMERIKANISCHE MAGNESIT AG) * Seite 5 * -- | 1,3 | C 04 B 35/12 C 04 B 35/64 |
| A | US - A - 4 162 284 (E.Q. DAHL) * Spalte 2, Zeilen 50 bis 60 * -- | 1-3,5 | |
| A | DE - C - 975 186 (DYNAMIDON-WERK ENGELHORN & CO.) ---- | | |

RECHERCHIERTE SACHGEBIETE (Int. Cl.³)

C 01 G 37/00
C 04 B 35/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 04-05-1981 | HÖRNER |

EPA form 1503.1 06.78